# EUROPEAN PATENT APPLICATION

(11) **EP 2 288 124 A1**
(43) Date of publication of application: **23.02.2011**
(21) Application number: 09832855.2
(22) Date of filing: 20.07.2009
(51) Int. Cl.: H04M 1/725

(54) **A MOBILE TERMINAL AND METHOD FOR PROVIDING USER SHORTCUT OPERATION**

(30) Priority: 16.12.2008 CN 200810179295
(71) Applicant: ZTE Corporation, Shenzhen, Guangdong 518057 (CN)
(72) Inventor: ZHANG, Xiaoyong, Shenzhen Guangdong 518057 (CN)
(74) Representative: Hutchinson, Glenn Stanley
(86) International application number: PCT/CN2009/072837
(87) International publication number: WO 2010/069173

(57) **Abstract**

A mobile terminal and method for providing user shortcut operations are provided. The mobile terminal includes a mobile terminal TV function module (103), as well as a touch track identification module (104) and a keypad key logic translation module (105) both connected to the mobile terminal TV function module; it also includes a user configuration module (106) that is connected to both the keypad key logic translation module (105) and the touch track identification module(104), as well as a storage unit that is connected to the user configuration module (106) and the mobile terminal TV function module (103). The user configuration module (106) is used for setting a key instruction and/or touch track instruction aiming at a certain operation according to a user's command and is also used for receiving the command sent by the user, searching the storage unit for the operation that corresponds to the received command, and calling the mobile terminal TV function module (103) through the keypad key logic translation module (105) and/or the touch track identification module (104) to execute the operation; the storage unit is used for recording the corresponding relationship between a certain operation and a key instruction and/or touch track instruction set by the user configuration module (106).

## Description

### TECHNICAL FIELD

The present invention relates to the mobile terminal TV field of mobile terminals, and specifically to a mobile terminal and method for providing user shortcut operations.

### BACKGROUND

As 3rd generation (3G) mobile communication technologies become more and more popular, mobile terminal-based multimedia applications are increasingly becoming a trend of mobile terminal applications. The program information of mobile terminal TV is also becoming more and more rich and diverse. Users need to perform various shortcut operations on a rich suite of programs, including operations such as TV channel options, program customization and reservation, screen capture, recording, etc. The technology of shortcut operations on mobile terminal TV is based on a keypad input technology, a touch screen technology, a track identification technology and a graphics application development technology.

While watching mobile terminal TV, if it is necessary to operate through touching, then the user can impose a certain pressure on the touch screen through a touch pen, click or slide the touch pen, and a touch screen driver converts a sample voltage into a corresponding coordinate point on the screen, and adapt it as a pixel point and message used by an input adaptation layer (IAL).

The IAL converts the touch message and touch coordinate into a message required by a graphics device interface/graphics user interface (GDI/GUI) and sends the message to the GDI/GUI.

The GDI/GUI divides the message reported from a bottom layer into clicking, lifting and moving of the touch pen, and attaches the corresponding coordinate data to these messages.

A mobile terminal TV module identifies reported tracks, and distinguishes the tracks into corresponding operations, such as channel change, customization/reservation, video capture, volume adjustment, brightness adjustment, etc.

While watching mobile terminal TV, if it is necessary to operate through a keypad, then the user can press a key on the keypad of the mobile terminal, and the keypad circuit will report a corresponding physical key code obtained by scanning to a keypad message queue.

The GDI/GUI takes values from the keypad message queue, converts the physical key code into an application key code required by upper layer application, and attaches the key value to the message.

The keypad key logic translation module of the mobile terminal TV receives and identifies the reported key message, converts it into a logical meaning, and performs a corresponding operation, such as channel change, customization/reservation, video recording and screen capture, volume adjustment, brightness adjustment, etc.

It can be known from the above that the current mobile terminal TV services mainly aim at such aspects as program contents encryption and acquisition, or program information acquisition, but has not addressed the optimization of user operation yet, thereby resulting in simple terminal user operations and lack of scalability. For example, during the process of playing back mobile terminal TV programs, the mobile terminal is generally in a full screen mode without providing the user with more interface prompt elements, at the same time, the program resources of mobile terminal TV are very abundant, it is therefore imperative to come up with a shortcut operation that is set based on a user requirement so as to improve the terminal user experience.

### SUMMARY

The technical problem that the present invention intends to resolve is providing a mobile terminal and method for providing user shortcut operations, thereby allowing different users to customize different shortcut operations for mobile terminal TV services.

In order to solve the above-mentioned problem, the present invention discloses a mobile terminal for providing user shortcut operations, and the mobile terminal comprises:
a mobile terminal TV function module;
a keypad key logic translation module, which is connected to the mobile terminal TV function module;
a touch track identification module, which is connected to the mobile terminal TV function module;
a user configuration module, which is connected to both the keypad key logic translation module and the touch track identification module, the user configuration module is set for providing a shortcuts setting interface for a user, sets a key instruction and/or a touch track instruction corresponding to an operation based on the user's command, and, according to the key instruction and/or the touch track instruction initiated by the terminal user, while the mobile terminal is playing back mobile terminal TV services, the user configuration module searches a storage unit for the operation corresponding to the key instruction and/or the touch track instruction, and calls the mobile terminal TV function module through the keypad key logic translation module and/or the touch track identification module to execute the operation, wherein the operation is an operation for mobile terminal TV services; and
a storage unit, connected to the user configuration module and the mobile terminal TV function module, is set to record the corresponding relationship between the operation and the key instruction and/or the touch track instruction that is set by the user configuration module.

Furthermore, that the storage unit records the corresponding relationship between the key instruction and the operation may mean saving an application key value converted from the key instruction and an operation value of the operation corresponding to the application key value; and/or that the storage unit records the corresponding relationship between the touch track instruction and the operation may mean saving a track vector converted from the touch track and an operation value of the operation corresponding to the track vector.

Furthermore, the storage unit may be set to adopt an array structure to save the application key value and the operation value corresponding to the application key value; and/or the storage unit may be set to save the track vector and the operation value corresponding to the track vector in the form of a structure list.

Preferably, that the user configuration module calls the mobile terminal TV function module through the keypad key logic translation module and/or the touch track identification module to execute the operation may mean: the user configuration module sends the found operation value corresponding to the application key value converted from the key instruction to the keypad key logic translation module; the keypad key logic translation module calls the mobile terminal TV function module to execute the corresponding operation according to the operation value; and/or the user configuration module sends the found operation value corresponding to the track vector converted from the touch track instruction to the touch track identification module; the touch track identification module calls the mobile terminal TV function module to execute the corresponding operation according to the operation value.

The present invention also discloses a method for providing user shortcut operations, the method includes:
a user sets a key instruction and/or a touch track instruction corresponding to an operation through a shortcut setting interface, and a mobile terminal records the corresponding relationship between the operation and the key instruction and/or the touch track instruction, wherein the operation is an operation for mobile terminal TV services;
while playing back mobile terminal TV services, the mobile terminal searches for and executes the operation corresponding to the key instruction and/or the touch track instruction after receiving the key instruction and/or the touch track instruction initiated by the terminal user.

Furthermore, recording the corresponding relationship between the key instruction and the operation may mean saving an application key value converted from the key instruction and an operation value corresponding to the application key value; and/or recording the corresponding relationship between the touch track instruction and the operation may mean saving a track vector converted from the touch track and an operation value corresponding to the track vector.

Furthermore, an array structure may be adopted to save the application key value and the operation value corresponding to the application key value; and/or the track vector and the operation value corresponding to the track vector may be saved in the form of a structure list.

Preferably, that the mobile terminal searches for and executes the operation corresponding to the key instruction and/or the touch track instruction may mean: searching for the operation value corresponding to the application key value converted from the key instruction, and executing the corresponding operation according to the operation value; and/or searching for the operation value corresponding to the track vector converted from the touch track instruction, and executing the corresponding operation according to the operation value.

The technical scheme of the present invention can be used to optimize the operability of mobile terminal TV and improve the operation efficiency of the mobile terminal; compared to operations on traditional mobile terminal TV, the present invention is flexible and easy to use and can bring a better user experience.

### BRIEF DESCRIPTION OF THE DRAWINGS

Fig. 1 is a structure diagram of a mobile terminal according to an embodiment of the present invention; and

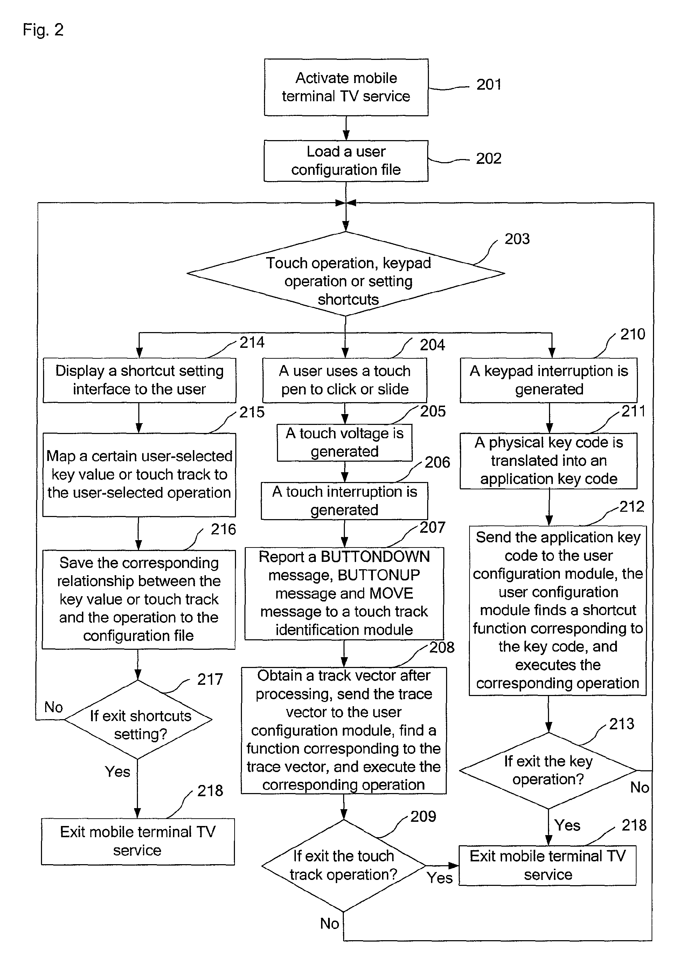

Fig. 2 is a flowchart of a method for providing user shortcut operations by the mobile terminal as illustrated in Fig. 1.

### DETAILED DESCRIPTION

The core idea of the present invention is that it can be practical to quickly and easily fulfill functions such as TV channel option, program customization/reservation, screen capture and recording by setting or mapping different functions of keys or touch tracks in the mobile terminal TV application, including such functions as one key for channel change, one key for screen capture, one key for video recording, one key for reservation, and one key for muting; or the above-mentioned shortcut functions is fulfilled through different tracks formed by the sliding of touch points, such as changing to a next channel by sliding from left to right, or changing to a previous channel by sliding from right to left, etc.

The specific implementation of the present invention is further described below in details in combination with the attached drawings.

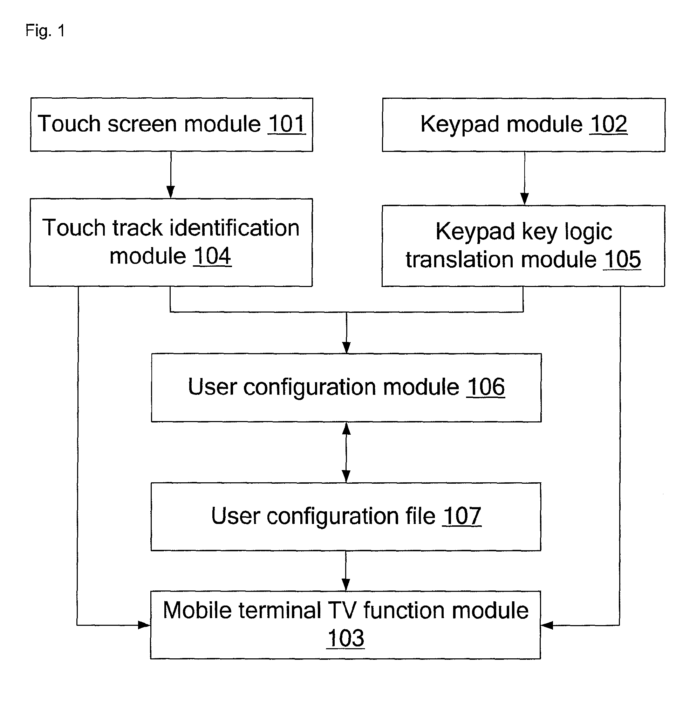

A mobile terminal for providing user shortcut operations, as shown in Fig. 1, comprises a touch screen module 101, a keypad module 102, a mobile terminal TV function module 103, a touch track identification module 104, a keypad key logic translation module 105, a user configuration module 106 and a storage unit, wherein the storage unit is a user configuration file 107 in this embodiment.

Wherein the user configuration module 106 is connected with the touch track identification module 104, the keypad key logic translation module 105 and the user configuration file 107, respectively; the touch screen module 101 is connected with the touch track identification module 104; the keypad module 102 is connected with the keypad key logic translation module 105; the mobile terminal TV function module 103 is connected with the user configuration file 107, the touch track identification module 104 and the keypad key logic translation module 105, respectively. The functions of individual modules are described below in details.

The touch screen module 101 is used for responding to input from an external touch pen and is only connected with the touch track identification module 104; when a physical click or sliding is performed on the touch screen, a touch interruption is generated, a thread function of the module is executed, the module converts a touch voltage of hardware into touch screen coordinates and saves the coordinate value into the memory space designated by the IAL, and the IAL accesses this memory space to acquire data, wherein the IAL calibrates the coordinate point reported by the touch screen module 101 and reports it to the touch track identification module 104, i.e. sending a touch track instruction initiated by the user to the touch track identification module 104;

the module would also perform message conversion and data attachment to a point within the buffer as follows: (1) converting it into a BUTTONDOWN message when the first touch interruption occurs; (2) converting it into a MOVE message when the coordinates of a subsequent point are different from the coordinates of its preceding point; (3) converting it into a BUTTONUP message when there are no sampling points during a certain time interval; and at the same time attaching screen coordinate data to a corresponding message, and transferring it to the touch track identification module 104 for processing.

The keypad module 102 is used for responding to input from an external keypad and is only connected with the keypad key logic translation module 105; when one of the keys on the mobile terminal keypad is pressed, a keypad circuit reports a corresponding physical key code obtained through scanning to a keypad message queue, the GDI/GUI takes a value from the keypad message queue, converts the physical key code into an application key code required by the upper layer application, and attaches the key value to a message, then the keypad message will be sent to the keypad key logic translation module 105, i.e. a key instruction initiated by the user will be sent to the keypad key logic translation module 105;

The mobile terminal TV function module 103 is used for creating standalone applications and fulfilling simple concurrent functions, such as concurrency with voice calls or video calls, and for displaying a decoded TV code stream on the mobile terminal screen, the module is connected with the touch track identification module 104, the keypad key logic translation module 105 and the user configuration file 107; when the module is initialized, it will read the user configuration file, write the values of configuration items of the configuration file into a corresponding global variable; if the user configuration file is invalid or a certain configuration item is invalid, then the module uses a default value to initialize the corresponding global variable; the module also provides other modules connected with it with an API so as to implement operations such as channel change, program contents acquisition, etc.

In this embodiment, the above-mentioned three modules can all be implemented employing existing technologies.

The touch track identification module 104, connected with the touch screen module 101 and the user configuration module 106, is used for converting a touch track instruction sent by the user into a track vector, sending the track vector to the user configuration module 106, and calling a corresponding function in the mobile terminal TV function module 103 to execute an operation according to an operation value returned by the user configuration module 106, wherein the operations for the corresponding functions in the mobile terminal TV function module 103 include channel change, volume adjustment, increasing or decreasing brightness, etc.
wherein the touch track identification module 104 can convert a touch track instruction into a track vector according to existing technologies, i.e. recording a series of coordinate points and touch events reported from a bottom layer into the memory, analyzing these points, determining the vector directions of the tracks, and then determining the track vectors.

The keypad key logic translation module 105, connected with the keypad module 102, the mobile terminal TV function module 103 and the user configuration module 106, is used for converting a key instruction sent by the user into an application key value, sending the application key value to the user configuration module 106, and calling a corresponding function in the mobile terminal TV function module 103 to execute an operation according to an operation value returned by the user configuration module 106, wherein the operations for the corresponding functions in the mobile terminal TV function module 103 include channel change, volume adjustment, increasing or decreasing brightness, etc.
wherein the keypad key logic translation module 105 can convert a key instruction, i.e. a keypad message reported by the GDI/GUI, into an application key value according to existing technologies.

The user configuration module 106 is used for allowing the user to set function mapping of all keys and/or function mapping of touch tracks on the mobile terminal, providing the user with a shortcut setting interface, setting a key and/or a touch track for a certain operation based on a user's command, i.e. mapping keys on the terminal and/or touch tracks into various operations in the mobile terminal TV application; the module is also used for receiving an application key value sent by the keypad key logic translation module 105 and/or a track vector sent by the touch track identification module 104, reading the configuration file, finding from it an operation value corresponding to the application key value and/or the track vector, and returning the operation value to the keypad key logic translation module 105 and/or the touch track identification module 104.

The user configuration file 107 is used for saving configuration parameters generated by the user configuration module 106, i.e. saving in the form of parameter values the terminal's application key values and/or track vectors and various corresponding operations (such as channel change, volume adjustment, brightness adjustment, minimization, and shortcut switch between channels, etc.) that are set to be read or written by the user configuration module 106, at the same time, the mobile terminal TV function module 103 can also read the configuration parameters in the user configuration file 107 to perform initialization or reboot operations;
wherein the user configuration file 107 is further divided into a configuration file for keypad shortcut function mapping and a configuration file for touch track shortcut function mapping, wherein the configuration file saving the keypad shortcut function mapping saves in the form of parameter values the application key value of each key and the operation value corresponding to the key value;
the configuration file saving the touch track shortcut function mapping saves in the form of parameter values a series of coordinates based on which vectors in chronological order are abstracted through calculations, and the corresponding operations, preferably, the configuration parameters of touch track shortcut function mapping can be saved in the form of a structure list.

In other embodiments, it is also practical to use a storage unit such as a register to save the user configuration parameters.

A method of the mobile terminal providing the user with shortcut operations is described below, and the method mainly comprises the following steps:
step 201, the user opens the mobile terminal, and activates the mobile terminal TV service;
step 202, loading the user configuration file, writing the configuration parameters of the configuration file into a corresponding global variable; if the user configuration file is invalid or a certain configuration parameter is invalid, then using a default value to initialize the corresponding global variable;
   wherein the configuration file includes a configuration file for keypad shortcut function mapping and a configuration file for touch track shortcut function mapping; and, that a certain configuration parameter is invalid means the configuration parameter exceeds the preset range, furthermore, once a configuration parameter is determined to be invalid, then the whole user configuration file is deemed to be abnormal (or called damaged) so that the whole user configuration file becomes invalid, at this moment, it can be recovered using the system's default configuration; here, an example is given to explain a configuration parameter being invalid: if the range of key codes is 21-200 during hardware design for key values, then it is deemed to be invalid once this range is exceeded; for another example, the number of shortcut functions designed (that can be provided for the user to set) is 20, which is expressed using an interval [0, 19], if a value falls outside this interval, then the value is invalid;
step 203, accessing the mobile terminal TV function module, wherein if the user chooses the touch operation, then executing step 204; if the user chooses the keypad operation, then executing step 210; if the user chooses to set shortcuts, then executing step 214; otherwise, waiting for user input;
step 204, the user uses a touch pen to click or slide a touch screen module;
step 205, a touch voltage is generated;
step 206, a touch interruption is generated;
step 207, the touch screen module reports generated BUTTONDOWN, BUTTONUP and MOVE messages to the touch track identification module; wherein each message carries coordinate data of a current touch point;
   here, when the touch pen clicks the touch screen, the touch screen will generate a voltage change physically, and such change will generate an interruption; the interruption will, once generated, trigger execution of the driver; the voltage distribution of the touch screen is linear, a point in the coordinate system of the screen therefore can be calculated through the voltage; the driver will continuously scan voltage change of the touch screen; the disappearance of voltage, should it occur, is equivalent to lifting the touch pen, and if another voltage value is generated, then it means that the touch pen has slid to another position; thus, the BUTTONDOWN, BUTTONUP and MOVE messages are generated;
step 208, the touch track identification module processes the message that is reported by the touch screen module and that carries the coordinate data of the current touch point, obtains a track vector direction, determines the track vector, and sends the track vector direction into the user configuration module, the user configuration module searches for the shortcut function corresponding to the track vector direction, i.e. finding the corresponding configuration parameters from the configuration file for touch track shortcut function mapping, and according to the values of the configuration parameters the terminal executes corresponding operations, such as channel change, screen capture, and muting, etc.
   in this step, the BUTTONDOWN message signifies the start of a stroke, a speed timer T determines whether this stroke is a part of the current stroke or the start of the next stroke; any BUTTONDOWN message within this timer T is always deemed as a stroke of the current touch track, the BUTTONDOWN message following timeout of this timer T is deemed as the start of the next user touch track, i.e. the start of the next user operation; the MOVE message signifies that a stroke continues, and the current module needs to record the point marked by the MOVE message; the BUTTONUP message signifies the end of a stroke, and can also signify the end of a word; when a BUTTONUP message arrives, it is necessary to activate the timer T; after timeout of the timer T, it is necessary to analyze the recorded strokes from the coordinate point and determine the vector directions of the strokes as well as the sequence among these vectors;
step 209, determining whether the user exits the touch track operation, if yes, then executing step 218, otherwise returning to the step 203;
step 210, a keypad interruption is generated;
step 211, a physical key code is translated into an application key code;
step 212, the keypad key logic translation module sends the obtained application key code to the user configuration module after receiving a key message, the user configuration module searches for the shortcut function corresponding to the key code, i.e. finding the corresponding configuration parameters from the configuration file for keypad shortcut function mapping, and according to the values of the configuration parameter the terminal executes the corresponding operations, such as channel change, screen capture, and muting, etc.
step 213, determining whether the user exits the key operation, if yes, then executing step 218, otherwise returning to the step 203;
step 214, the user configuration module displays a shortcut setting interface to the user via the GUI controller, and the interface includes optional key values, touch tracks and optional shortcut operations;
step 215, the user configuration module maps a user-selected key value or touch track to a user-selected operation;
step 216, if the user chooses to save, then the user saves the corresponding relationship between the key value or touch track and the operation to the configuration file, i.e. the shortcut function mapped by the user-set key and/or touch track;
step 217, determining whether the user exits shortcut setting, if yes, then executing step 218, otherwise returning to the step 203;
step 218, exiting the mobile terminal TV service.

It can be seen from the above-mentioned embodiments that, because of the introduction of keypad and touch shortcut operations, compared to traditional mobile terminal TV operations, the present invention optimizes the operability of mobile terminal TV and improved the flexibility, ease of use and operation efficiency of the mobile terminal, thereby bringing a better user experience.

Of course, the present invention may also have many other embodiments; without departing from the spirit and principle of the present invention, those skilled in the art can make various relevant changes and variations based on the present invention, these relevant changes and variations shall all be included in the protection scope of the appended claims of the present invention.

### INDUSTRIAL APPLICABILITY

Because of the introduction of keypad and touch shortcut operations, compared to traditional mobile terminal TV operations, the present invention optimizes the operability of mobile terminal TV and improves the flexibility, ease of use and operation efficiency of the mobile terminal, thereby bringing a better user experience and offering a very strong industrial applicability.

## Claims

1. A mobile terminal for providing user shortcut operations, comprising:
a mobile terminal TV function module;
a keypad key logic translation module, which is connected to the mobile terminal TV function module;
a touch track identification module, which is connected to the mobile terminal TV function module;
a user configuration module, which is connected to both the keypad key logic translation module and the touch track identification module, the user configuration module being set for providing a shortcuts setting interface for a user, setting a key instruction and/or a touch track instruction corresponding to an operation based on a user's command, and, according to the key instruction and/or the touch track instruction initiated by the terminal user, while the mobile terminal is playing back mobile terminal TV services, the user configuration module searching a storage unit for the operation corresponding to the key instruction and/or the touch track instruction, and calling the mobile terminal TV function module through the keypad key logic translation module and/or the touch track identification module to execute the operation, wherein the operation is an operation for mobile terminal TV services; and
a storage unit, connected to the user configuration module and the mobile terminal TV function module, being set to record the corresponding relationship between the operation and the key instruction and/or the touch track instruction set by the user configuration module.

2. The mobile terminal according to claim 1, wherein that the storage unit records the corresponding relationship between the key instruction and the operation means, saving an application key value converted from the key instruction and an operation value of the operation corresponding to the application key value; and/or
that the storage unit records the corresponding relationship between the touch track instruction and the operation means, saving a track vector converted from the touch track and an operation value of the operation corresponding to the track vector.

3. The mobile terminal according to claim 2, wherein the storage unit is set to adopt an array structure to save the application key value and the operation value corresponding to the application key value; and/or
the storage unit is set to save the track vector and the operation value corresponding to the track vector in the form of a structure list.

4. The mobile terminal according to claim 2, wherein that the user configuration module calls the mobile terminal TV function module through the keypad key logic translation module and/or the touch track identification module to execute the operation means:
the user configuration module sends the found operation value corresponding to the application key value converted from the key instruction to the keypad key logic translation module; the keypad key logic translation module calls the mobile terminal TV function module to execute the corresponding operation according to the operation value; and/or
the user configuration module sends the found operation value corresponding to the track vector converted from the touch track instruction to the touch track identification module; the touch track identification module calls the mobile terminal TV function module to execute the corresponding operation according to the operation value.

5. The mobile terminal according to claim 3, wherein that the user configuration module calls the mobile terminal TV function module through the keypad key logic translation module and/or the touch track identification module to execute the operation means:
the user configuration module sends the found operation value corresponding to the application key value converted from the key instruction to the keypad key logic translation module; the keypad key logic translation module calls the mobile terminal TV function module to execute the corresponding operation according to the operation value; and/or
the user configuration module sends the found operation value corresponding to the track vector converted from the touch track instruction to the touch track identification module; the touch track identification module calls the mobile terminal TV function module to execute the corresponding operation according to the operation value.

6. A method for providing user shortcut operations, comprising:
a user setting a key instruction and/or a touch track instruction corresponding to an operation through a shortcut setting interface, and a mobile terminal recording the corresponding relationship between the key instruction and/or touch track instruction and the operation, wherein the operation is an operation for mobile terminal TV services;
while playing back mobile terminal TV services, the mobile terminal searching for and executing the operation corresponding to the key instruction and/or the touch track instruction after receiving the key instruction and/or the touch track instruction initiated by the terminal user.

7. The method according to claim 6, wherein recording the corresponding relationship between the key instruction and the operation means, saving an application key value converted from the key instruction and an operation value corresponding to the application key value; and/or
recording the corresponding relationship between the touch track instruction and the operation means, saving a track vector converted from the touch track and an operation value corresponding to the track vector.

8. The method according to claim 7, wherein an array structure is adopted to save the application key value and the operation value corresponding to the application key value; and/or
the track vector and the operation value corresponding to the track vector is saved in the form of a structure list.

9. The method according to claim 7, wherein that the mobile terminal searches for and executes the operation corresponding to the key instruction and/or the touch track instruction means:
searching for the operation value corresponding to the application key value converted from the key instruction, and executing the corresponding operation according to the operation value; and/or
searching for the operation value corresponding to the track vector converted from the touch track instruction, and executing the corresponding operation according to the operation value.

10. The method according to claim 8, wherein that the mobile terminal searches for and executes the operation corresponding to the key instruction and/or the touch track instruction means:
searching for the operation value corresponding to the application key value converted from the key instruction, and executing the corresponding operation according to the operation value; and/or
searching for the operation value corresponding to the track vector converted from the touch track instruction, and executing the corresponding operation according to the operation value.
